# EUROPEAN PATENT APPLICATION

(11) **EP 2 468 384 A1**
(43) Date of publication of application: **27.06.2012**
(21) Application number: 11190177.3
(22) Date of filing: 22.11.2011
(51) Int. Cl.: B01D 53/04, B01D 53/62, B01D 53/047

(54) **Method and system for carbon dioxide removal**

(30) Priority: 22.12.2010 US 976408
(71) Applicant: Hamilton Sundstrand Space Systems International, Inc., Windsor Locks CT 06096-1010 (US)
(72) Inventor: Papale, William G., Simsbury, CT Connecticut 06070 (US)
(74) Representative: Tomlinson, Kerry John

(57) **Abstract**

A carbon dioxide (CO₂) removal system (10) includes first and second sorbent beds (14A,14B), a heat exchange system (16) and means for reducing pressure (22). The sorbent beds (14A,14B) each have a solid amine sorbent (26) for adsorbing and desorbing CO₂. At a given time, one of the sorbent beds (14A) adsorbs CO₂ and the other sorbent bed (14B) desorbs CO₂. The heat exchange system (16) cools the CO₂ adsorbing bed (14A) and heats the CO₂ desorbing bed (14B) so that the temperature of the CO₂ desorbing bed (14B) is greater than the temperature of the CO₂ adsorbing bed (14A). The means for reducing pressure (22) reduces CO₂ pressure at the CO₂ desorbing bed (14B). A method for removing CO₂ includes supplying a gas stream to a sorbent bed (14A) containing a solid amine sorbent (26) to adsorb CO₂, reducing pressure at another sorbent bed (14B) to desorb CO₂, heating the CO₂ desorbing bed (14B), cooling the CO₂ adsorbing bed, (14A) and removing CO₂ from the CO₂ desorbing bed (14B).

## Description

### BACKGROUND

The removal of carbon dioxide from closed environments such as spacecraft and submersible craft is necessary to maintain carbon dioxide levels within accepted respirable limits. Currently, carbon dioxide removal is typically accomplished through non-reversible chemical fixation sorbents (lithium hydroxide, potassium superoxide), reversible chemical fixation adsorbents (liquid amines) or reversible physical adsorption (molecular sieve). Each of these removal systems has one or more drawbacks. For example, non-reversible sorbents do not allow captured carbon dioxide to be used in Sabatier reactions for the generation of water and oxygen. Oxygen generation via a Sabatier reaction can reduce resupply requirements for spacecraft. The carbon dioxide is not available for additional reactions and the used sorbents must be stored on the spacecraft or submersible for later disposal, taking up space and adding weight to the craft. Chemical fixation by liquid amines such as monoethanolamine (MEA) requires high temperatures (120 °C) and, therefore, large amounts of energy, to reverse the carbon dioxide capture reaction. MEA also degrades at elevated temperatures and can potentially contaminate closed environments due to its relatively low vapor pressure. Molecular sieves require very dry air streams. Water vapor must be removed from air streams before they are delivered to molecular sieves. Regeneration cycles of molecular sieves also require temperatures on the order of 200 °C (400 ° F) and large amounts of energy.

In view of the disadvantages of existing technology, an alternative carbon dioxide removal method and system that is regenerative and allows for downstream processing (i.e. Sabatier reaction) is desirable.

### SUMMARY

A carbon dioxide (CO₂) removal system includes first and second sorbent beds, a heat exchange system and means for reducing a partial pressure of CO₂. The first and second sorbent beds each have a solid amine sorbent for adsorbing and desorbing CO₂. At a given time, one of the sorbent beds adsorbs CO₂ and the other sorbent bed desorbs CO₂. The heat exchange system cools the sorbent bed adsorbing CO₂ and heats the sorbent bed desorbing CO₂ so that the temperature of the sorbent bed desorbing CO₂ is greater than the temperature of the sorbent bed adsorbing CO₂. The means for reducing a partial pressure of CO₂ reduces partial pressure of CO₂ at the sorbent bed desorbing CO₂.

A method for removing CO₂ from a gas stream includes supplying the gas stream to a first sorbent bed containing a solid amine sorbent and a second sorbent bed containing a solid amine sorbent to cause CO₂ to be adsorbed and removed from the process air stream. Pressure is reduced at one of the first and second sorbent beds to cause CO₂ to be desorbed and removed from the first and second sorbent beds so that one of the first and second sorbent beds is adsorbing CO₂ and the other sorbent bed is desorbing CO₂. The sorbent bed that is desorbing CO₂ is heated and the sorbent bed that is adsorbing CO₂ is cooled so that a temperature of the sorbent bed desorbing CO₂ is greater than a temperature of the sorbent bed adsorbing CO₂ CO₂ is removed from the sorbent bed desorbing CO₂ as a CO₂ gas stream.

### BRIEF DESCRIPTION OF THE DRAWINGS

FIG. 1 illustrates a carbon dioxide removal system in a first operating mode.

FIG. 2 illustrates the carbon dioxide removal system of FIG. 1 in a second operating mode.

FIG. 3 illustrates another embodiment of a carbon dioxide removal system.

FIG. 4 illustrates the carbon dioxide removal system of FIG. 3 in a second operating mode.

FIG. 5 illustrates a method for removing carbon dioxide from a process stream.

### DETAILED DESCRIPTION

The present invention provides a system and method for carbon dioxide removal. The carbon dioxide removal system utilizes thermally linked sorbent beds. Minimal additional energy is used to heat and cool the desorbing and adsorbing beds, respectively. A pump or vacuum is used to reduce carbon dioxide partial pressure at the desorbing bed. The removed carbon dioxide can be removed from the system or routed for other uses such as Sabatier reactions. The carbon dioxide removal method and system of the present invention enables the use of a range of bed sizes that can be cycled at various frequencies between adsorption and desorption without incurring significant power penalties because the temperatures of the adsorbing and desorbing beds are kept low.

According to the carbon dioxide removal systems and methods described herein, process streams include any gaseous stream. Process streams generally include gas streams circulating within closed environments including, but not limited to, spacecraft, submersible craft, aircraft and other closed air environments. Exemplary process streams include air streams in spacecraft and submersible craft, such as cabin air. These process streams contain carbon dioxide that can be removed from the process stream and reintroduced into another stream for use in other reactions or removed from the spacecraft, submersible craft, aircraft or other closed air environment.

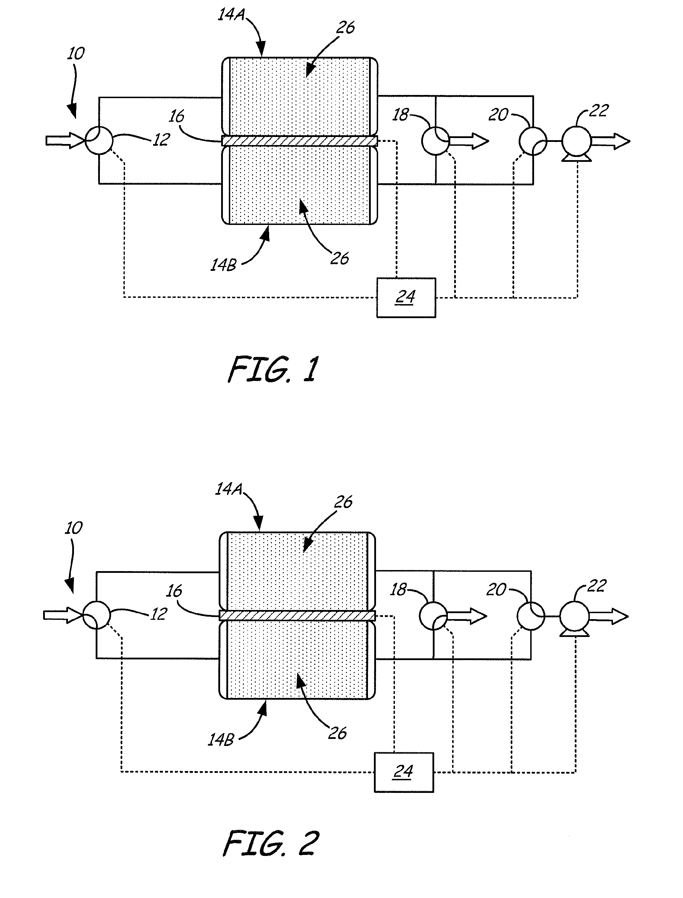

FIG. 1 illustrates one embodiment of carbon dioxide (CO₂ removal system 10. CO₂ removal system 10 includes inlet valve 12, first sorbent assembly 14A, second sorbent assembly 14B, heat exchange system 16, gas stream outlet valve 18, CO₂ outlet valve 20, pump 22 and controller 24. A process stream enters CO₂ removal system 10 via inlet valve 12. The process stream can be delivered to CO₂ removal system 10 by pump or other means. Inlet valve 12 allows the process air stream to communicate with first sorbent assembly 14A and second sorbent assembly 14B. Depending on the position of inlet valve 12, the process stream is directed to first sorbent assembly 14A or second sorbent assembly 14B. As shown in FIG. 1, inlet valve 12 is positioned so that the process stream is directed to first sorbent assembly 14A. The process stream contains CO₂. Exemplary incoming process streams for CO₂ removal system 10 contain between about 0.5% CO₂ and about 1% CO₂ by volume.

First sorbent assembly 14A includes a solid amine sorbent. Solid amine sorbent 26 is contained within first sorbent assembly 14A. Solid amine sorbent 26 is a regenerable CO₂ sorbent. In one exemplary embodiment, solid amine sorbent 26 constitutes one of the amine sorbents described in U.S. Patent No. 6,364,938, which is hereby incorporated by reference in its entirety. Under certain conditions, solid amine sorbent 26 adsorbs CO₂ from a process stream flowing through first sorbent assembly 14A and in contact with solid amine sorbent 26. In this case, CO₂ is removed from the process stream flowing through first sorbent assembly 14A when it is adsorbed by solid amine sorbent 26. Under other conditions, solid amine sorbent 26 desorbs CO₂ to a process stream flowing through first sorbent assembly 14A and in contact with solid amine sorbent 26. Here, CO₂ from solid amine sorbent 26 is taken up by the process stream and carried away from first sorbent assembly 14A. The temperature of and pressure surrounding solid amine sorbent 26 determines whether solid amine sorbent 26 adsorbs CO₂ or desorbs CO₂. Second sorbent assembly 14B is generally located near and can have identical or similar size and dimensions to first sorbent assembly 14A. Second sorbent assembly 14B also includes solid amine sorbent 26. First sorbent assembly 14A and second sorbent assembly 14B are designed to generally operate in opposing sorption modes. That is, when first sorbent assembly 14A is adsorbing CO₂, second sorbent assembly 14B is desorbing CO₂. When first sorbent assembly 14A is desorbing CO₂, second sorbent assembly 14B is adsorbing CO₂.

First sorbent assembly 14A and second sorbent assembly 14B are thermally linked by a heat exchange system. In the embodiment illustrated in FIG. 1, the heat exchange system includes thermoelectric device 16. Thermoelectric device 16 is positioned between first sorbent assembly 14A and second sorbent assembly 14B. Thermoelectric devices take advantage of the thermoelectric effect, which describes the direct conversion of temperature differences to electric voltage and vice versa. A thermoelectric device creates a voltage when there is a different temperature on each side. Conversely, when a voltage is applied to a thermoelectric device, it creates a temperature difference (i.e. one side is heated while the other side is cooled). For example, when a voltage is applied to thermoelectric device 16, one side of thermoelectric device 16 generates heat and heats adjacent first sorbent assembly 14A. At the same time, the other side of thermoelectric device 16 is cooled and cools adjacent second sorbent assembly 14B. The voltage is reversed to cool first sorbent assembly 14A and heat second sorbent assembly 14B. Thermoelectric device 16 provides an efficient means of temperature adjustment without requiring a significant amount of power. While the heat exchange system can take forms other than a thermoelectric device, CO₂ removal system 10 will be described in greater detail where the heat exchange system is a thermoelectric device.

Gas stream outlet valve 18 communicates with first sorbent assembly 14A and second sorbent assembly 14B. Gas stream outlet valve 18 allows a process stream that has passed through a CO₂ adsorbing bed (first sorbent assembly 14A or second sorbent assembly 14B) to exit CO₂ removal system 10 and return to the spacecraft, submersible craft or other closed environment with a lower amount of CO₂ than the process stream contained when it entered CO₂ removal system 10 through inlet valve 12. At a given time, gas stream outlet valve 18 communicates with the CO₂ adsorbing bed but not the CO₂ desorbing bed.

CO₂ outlet valve 20 also communicates with first sorbent assembly 14A and second sorbent assembly 14B. CO₂ outlet valve 20 allows a process stream that has passed through a CO₂ desorbing bed (first sorbent assembly 14A or second sorbent assembly 14B) to exit CO₂ removal system 10. The process stream exiting CO₂ removal system 10 through CO₂ outlet valve 20 generally has a higher concentration than the process stream entering CO₂ removal system 10 through inlet valve 12.

In one embodiment of CO₂ removal system 10, CO₂ outlet valve 20 is positioned between first sorbent assembly 14A and second sorbent assembly 14B and pump 22. Pump 22 is a fluid pump that is capable of reducing the pressure within CO₂ removal system 10 at and "downstream" from first sorbent assembly 14A and second sorbent assembly 14B. Pump 22 pumps fluid out of and away from CO₂ removal system 10. Pump 22 essentially reduces pressure on the outlet side of first sorbent assembly 14A and second sorbent assembly 14B to increase the rate of CO₂ removal (desorption) from the desorbing bed. As discussed in greater detail below, pump 22 allows CO₂ removal system 10 to produce an exiting process stream rich in CO₂. In spacecraft applications, pump 22 can be replaced by a space vacuum.

The process stream flowing through CO₂ outlet valve 20 can be disposed of or collected. When a space vacuum is used in place of pump 22, the process stream removed from CO₂ removal system 10 through CO₂ outlet valve 20 is disposed of as it is vented to space (i.e. dumped overboard). When CO₂ removal system 10 includes pump 22, the process stream removed through CO₂ outlet valve 20 can be disposed of (i.e. dumped overboard) or collected for additional use. Some regulations discourage the terrestrial disposal of CO₂. Other applications can use process streams rich in CO₂ in Sabatier reactions to form water and/or oxygen.

In the embodiment of CO₂ removal system 10 shown in FIGS. 1 and 2, controller 24 communicates with inlet valve 12, thermoelectric device 16, gas stream outlet valve 18, CO₂ outlet valve 20 and pump 22. Controller 24 controls the valves, heat exchange system and pump of CO₂ removal system 10 to cycle the first sorbent assembly 14A and second sorbent assembly 14B between CO₂ adsorption and CO₂ desorption. The role of controller 24 and how the valves, heat exchange system and pump operate during the CO₂ removal process are discussed in additional detail below.

As shown in FIGS. 1 and 2, first sorbent assembly 14A and second sorbent assembly 14B are thermally linked by thermoelectric device 16. During operation of CO₂ removal system 10, a voltage is applied to thermoelectric device 16 such that the CO₂ adsorbing bed is cooled while the CO₂ desorbing bed is heated. Thermoelectric device 16 generally maintains the CO₂ desorbing bed at a higher temperature than the CO₂ adsorbing bed. When coupled with the pressure reduction produced by pump 22, the working capacity of CO₂ removal system 10 is increased compared to systems utilizing only passive heat transfer between the adsorbing and desorbing beds. The operation of CO₂ removal system 10 shown in FIGS. 1 and 2 will be discussed to illustrate how temperature (thermoelectric device 16) and pressure (pump 22) affects CO₂ adsorption and CO₂ desorption.

As shown in FIG. 1, CO₂ removal system 10 is operating in a state where first sorbent assembly 14A is the adsorbing bed. A process stream enters CO₂ removal system 10 through inlet valve 12. Inlet valve 12 is positioned to allow the process stream to enter first sorbent assembly 14A. CO₂ is adsorbed to solid amine sorbent 26 in first sorbent assembly 14A. Solid amine sorbent 26 has a defined capacity for CO₂ adsorption. The temperature of solid amine sorbent 26 and the CO₂ pressure within first sorbent assembly 14A determine how much CO₂ can be loaded onto solid amine sorbent 26. As the temperature of solid amine sorbent 26 decreases, the loading capacity for CO₂ adsorption increases. As the partial pressure of CO₂ within first sorbent assembly 14A increases, the loading capacity for CO₂ adsorption also increases. The adsorption of CO₂ by solid amine sorbent 26 is exothermic. Thus, as CO₂ is adsorbed by solid amine sorbent 26, the temperature of solid amine sorbent 26 increases, reducing its capacity to adsorb CO₂ until it reaches an equilibrium state where the temperature of solid amine sorbent 26 prevents further CO₂ adsorption. Thermoelectric device 16 operates to cool first sorbent assembly 14A and, hence, solid amine sorbent 26 contained within first sorbent assembly 14A. By actively cooling first sorbent assembly 14A, the CO₂ loading capacity of solid amine sorbent 26 is increased allowing additional CO₂ adsorption within first sorbent assembly 14A. Since first sorbent assembly 14A is cooled by thermoelectric device 16 as CO₂ is adsorbed by solid amine sorbent 26, a temperature-related pressure increase is generally not observed during CO₂ adsorption. After passing through first sorbent assembly 14A, the process stream is removed from CO₂ removal system 10 via gas stream outlet valve 18. The process stream removed through gas stream outlet valve 18 has a lower amount of CO₂ than the process stream that entered CO₂ removal system 10 through inlet valve 12.

At the same time that first sorbent assembly 14A is adsorbing CO₂, second sorbent assembly 14B is desorbing CO₂. Second sorbent assembly 14B includes solid amine sorbent 26 that contains adsorbed CO₂ from an earlier CO₂ adsorption cycle. The desorption of CO₂ by solid amine sorbent 26 is endothermic. As noted above, as the temperature of solid amine sorbent 26 decreases, the loading capacity for CO₂ adsorption increases. Thus, as CO₂ is desorbed by solid amine sorbent 26, the temperature of solid amine sorbent 26 decreases, making it more difficult to desorb CO₂ until it reaches an equilibrium state where the temperature of solid amine sorbent 26 prevents further CO₂ desorption. At the same time that thermoelectric device 16 operates to cool first sorbent assembly 14A, thermoelectric device 16 heats second sorbent assembly 14B. By actively heating second sorbent assembly 14B, the CO₂ loading capacity of solid amine sorbent 26 is decreased making it easier to desorb CO₂ from solid amine sorbent 26 within second sorbent assembly 14B.

Pump 22 operates to reduce the partial pressure of CO₂ at second sorbent assembly 14B. As noted above, as the partial pressure of CO₂ within second sorbent assembly 14B increases, the loading capacity for CO₂ adsorption also increases. Pump 22 communicates with the CO₂ desorbing bed (second sorbent assembly 14B in the system shown in FIG. 1). Thus, as pump 22 pumps fluid away from CO₂ removal system 10, the partial pressure of CO₂ at second sorbent assembly 14B is reduced, thereby reducing the CO₂ loading capacity of solid amine sorbent 26 within second sorbent assembly 14B. Since the CO₂ loading capacity of the desorbing bed is reduced, CO₂ present in second sorbent assembly 14B is more easily removed from solid amine sorbent 26. A process stream containing high levels of CO₂ is removed from second sorbent assembly 14B and exits CO₂ removal system 10 via CO₂ outlet valve 20. The process stream removed through CO₂ outlet valve 20 has a higher amount of CO₂ than the process stream that entered CO₂ removal system 10 through inlet valve 12. In exemplary embodiments the removed process stream contains at least about 90% CO₂ by volume. In more exemplary embodiments the removed process stream contains at least about 95% CO₂ by volume.

FIG. 2 illustrates the CO₂ removal system 10 of FIG. 1 where the CO₂ adsorbing and CO₂ desorbing beds are reversed. Having adsorbed CO₂ according to the description above and shown in FIG. 1, first sorbent assembly 14A is now desorbing CO₂ in FIG. 2. Likewise, having given up its adsorbed CO₂ according to the description above and shown in FIG. 1, second sorbent assembly 14B is now adsorbing CO₂ in FIG. 2. Controller 24 adjusts inlet valve 12, thermoelectric device 16, gas stream outlet valve 18, CO₂ outlet valve 20 and pump 22 so that the process and output streams are flowing through the proper sorbent assemblies. Inlet valve 12 is positioned to allow the process stream to enter second sorbent assembly 14B. Thermoelectric device 16 operates to cool second sorbent assembly 14B and heat first sorbent assembly 14A. After passing through second sorbent assembly 14B, the process stream is removed from CO₂ removal system 10 via gas stream outlet valve 18. Pump 22 operates to reduce the partial pressure of CO₂ at first sorbent assembly 14A. A process stream containing high levels of CO₂ is removed from first sorbent assembly 14A and exits CO₂ removal system 10 via CO₂ outlet valve 20.

The descriptions of the CO₂ adsorbing bed (first sorbent assembly 14A) and the CO₂ desorbing bed (second sorbent assembly 14B) in FIG. 1 above illustrate a snapshot of adsorption and desorption. Between adsorption and desorption modes, each bed can enter a transitional state. For example, in the case of the adsorbing bed, once solid amine sorbent 26 of first sorbent assembly 14A has reached its CO₂ adsorption capacity, first sorbent assembly 14A is no longer adsorbing CO₂. First sorbent assembly 14A can now be heated to increase the CO₂ partial pressure within first sorbent assembly 14A. By heating first sorbent assembly 14A, the CO₂ loading capacity of solid amine sorbent 26 within first sorbent assembly 14A is reduced, preparing it for the CO₂ desorption cycle. The voltage applied to thermoelectric device 16 is reversed to accommodate the heating change in this transitional state. At the same time, solid amine sorbent 26 of second sorbent assembly 14B has released all of the CO₂ it is capable of desorbing to the negative pressure process stream. Second sorbent assembly 14B can now be cooled to increase the CO₂ loading capacity of solid amine sorbent 26 within second sorbent assembly 14B. By cooling second sorbent assembly 14B, the CO₂ loading capacity of solid amine sorbent 26 within second sorbent assembly 14B is increased, preparing it for the CO₂ adsorption cycle.

The transitional states described above can be isolated from the adsorbing and desorbing operations or integrated within the adsorbing and desorbing operations. For example, first sorbent assembly 14A can be isolated from CO₂ removal system 10 using valves 12, 18 and 20 to prevent process stream flow through first sorbent assembly 14A. First sorbent assembly 14A can then be heated to increase the pressure within first sorbent assembly 14A. Once first sorbent assembly 14A has been heated to an appropriate temperature, valves 12, 18 and 20 can be positioned to allow first sorbent assembly 14A to transition to the desorption mode. Alternatively, first sorbent assembly 14A can transition to the desorption mode followed by heating and application of negative pressure to increase the rate of CO₂ desorption. Whether the transitional states are isolated or integrated within CO₂ removal system 10 will depend on application or efficiency requirements and design considerations for CO₂ removal system 10.

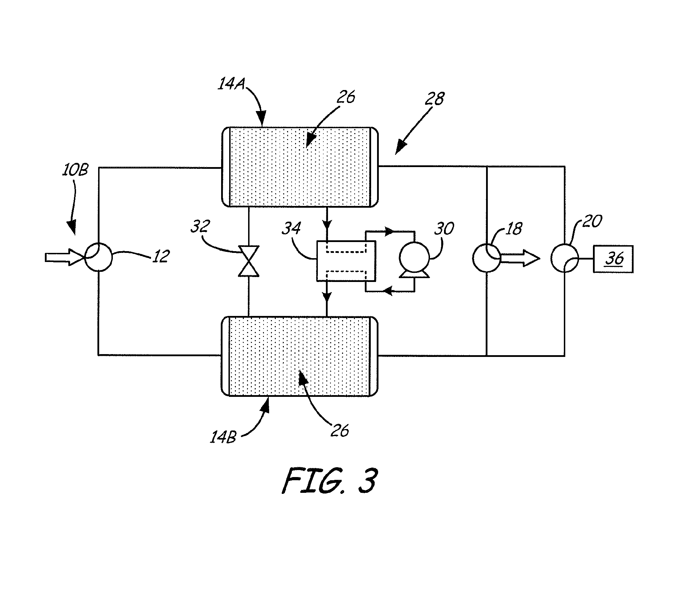

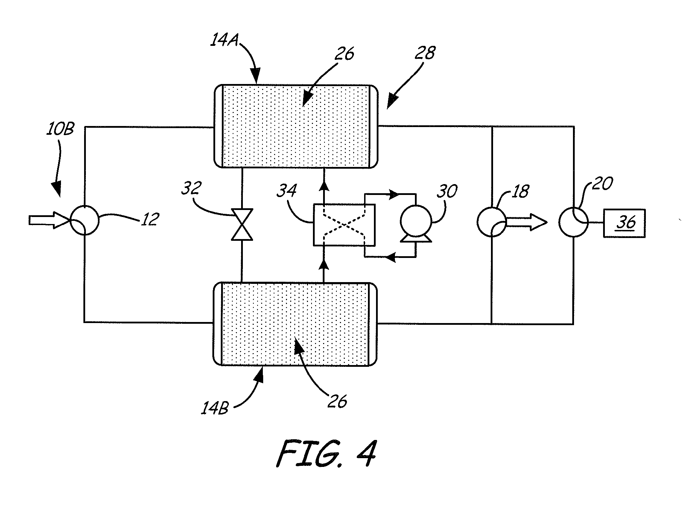

FIG. 3 illustrates an alternative embodiment of a CO₂ removal system (CO₂ removal system 10B) in which thermoelectric device 16 has been replaced by heat exchange system 28. In one embodiment, heat exchange system 28 operates as a vapor-compression refrigeration cycle. Heat exchange system 28 includes heat pump 30, expansion device 32 and reversing valve 34. First sorbent assembly 14A is adsorbing CO₂ and functions as the evaporator. Heat is transferred from first sorbent assembly 14A to a refrigerant within heat exchange system 28. The refrigerant is delivered to reversing valve 34, where it is directed to heat pump 30. Heat pump 30 functions as the compressor and delivers the refrigerant to second sorbent assembly 14B. Second sorbent assembly 14B is desorbing CO₂ and functions as the condenser. Heat is transferred from the refrigerant to second sorbent assembly 14B. The refrigerant is delivered to expansion device 32 where it expands. The refrigerant is then delivered to first sorbent assembly 14A to repeat the process. The flow of refrigerant is reversed using reversing valve 34 when the adsorbing and desorbing beds are cycled. FIG. 4 illustrates CO₂ removal system 10B where second sorbent assembly 14B is adsorbing CO₂ and first sorbent assembly 14A is desorbing CO₂. Here, second sorbent assembly 14B functions as the evaporator and first sorbent assembly 14A functions as the condenser. Reversing valve 34 can adjust the flow of refrigerant within heat exchange system 28 so that heat pump 30 only pumps refrigerant in a single direction.

FIGS. 3 and 4 also illustrate CO₂ removal system 10B in which no pump is connected to CO₂ outlet valve 20. Instead, a negative pressure is supplied by space vacuum 36. In such an embodiment, CO₂ removed by CO₂ removal system 10B cannot be collected for additional use.

A wide range of temperatures are suitable for first sorbent assembly 14A and second sorbent assembly 14B during the CO₂ removal process. CO₂ removal system 10 generally operates most effectively at temperatures between about 15 °C and about 80 °C. In an exemplary embodiment, the desorbing bed is heated to a temperature between about 35 °C and about 80 °C while the adsorbing bed is cooled to a temperature between about 15 °C and about 25 °C. In one exemplary embodiment, the desorbing bed is heated to a temperature between about 55 °C and about 80 °C. Due to the energy required to actively heat and cool first sorbent assembly 14A and second sorbent assembly 14B, keeping the temperature difference between the desorbing bed and the adsorbing bed small is desirable. Determination of ideal temperature differences depends upon the particular application CO₂ removal system 10 is designed for in addition to CO₂ removal rate requirements. In exemplary embodiments, the temperature difference between the desorbing bed and the adsorbing bed is between about 10 °C and about 65 °C. In one exemplary embodiment, the temperature difference between the desorbing bed and the adsorbing bed is between about 10 °C and about 35 °C. The low temperature difference between the desorbing and adsorbing beds generally allows CO₂ removal system 10 to operate with much greater efficiency than liquid amine and molecular sieve systems. Generally speaking, lower temperature differentials are not necessarily required on submersible craft where energy sources are not limited; however, lower temperature differentials can be preferred for some spacecraft applications where energy sources are limited.

A wide range of pressures can be drawn on the desorbing bed. CO₂ removal system 10 generally operates most effectively where pump 22 or space vacuum 36 generates a negative pressure on the desorbing bed between about 3.5 kPa (0.5 psi) and about 100 kPa (14.5 psi). In an exemplary embodiment, a negative pressure of between about 40 kPa (5.8 psi) and about 80 kPa (11.6 psi) is drawn on the desorbing bed.

CO₂ removal system 10 can employ a wide range of cycle times between bed transitions from CO₂ adsorption to CO₂ desorption and vice versa. As is the case with the temperature difference between the adsorbing bed and the desorbing bed, determination of ideal cycle times depends upon the particular application CO₂ removal system 10 is designed for in addition to CO₂ removal rate requirements. In exemplary embodiments, the adsorbing and desorbing beds cycle at an interval no greater than about 30 minutes. In one exemplary embodiment, the adsorbing and desorbing beds cycle at an interval no greater than about 20 minutes.

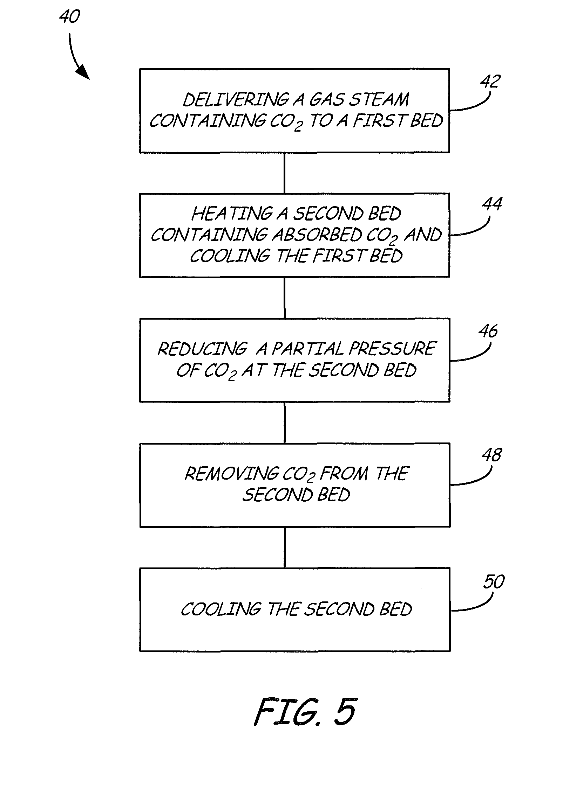

In addition to the CO₂ removal system described above, the present invention provides a method for removing CO₂ from a gas stream. Taken from the above description of CO₂ removal system 10, FIG. 5 illustrates a method of removing CO₂ from a gas stream. Method 40 includes delivering a gas stream containing CO₂ to a first bed having a solid amine sorbent (step 42). CO₂ within the gas stream is adsorbed by the solid amine sorbent in the first bed. Method 40 also includes heating a second bed having a solid amine sorbent containing adsorbed CO₂ and cooling the first bed so that the temperature of the second bed is greater than the temperature of the first bed (step 44). Method 40 further includes reducing a partial pressure of CO₂ in the second bed to desorb CO₂ from the solid amine sorbent in the second bed (step 46) and removing CO₂ from the second bed (step 48). Method 40 also includes cooling the second bed so that the solid amine sorbent in the second bed can adsorb CO₂ (step 50).

While the invention has been described with reference to exemplary embodiments, it will be understood by those skilled in the art that various changes may be made and equivalents may be substituted for elements thereof without departing from the scope of the invention, which is defined by the claims. In addition, many modifications may be made to adapt a particular situation or material to the teachings of the invention without departing from the scope thereof. Therefore, it is intended that the invention not be limited to the particular embodiments disclosed, but that the invention will include all embodiments falling within the scope of the appended claims.

## Claims

1. A carbon dioxide (CO₂) removal system comprising:
first and second sorbent beds (14A,14B), each of the sorbent beds having a solid
amine sorbent (26) for adsorbing or desorbing CO₂, wherein one of the sorbent beds adsorbs CO₂ and the other of the sorbent beds desorbs CO₂ at a given time;
a heat exchange system (16;28) for cooling the sorbent bed adsorbing CO₂ and
heating the sorbent bed desorbing CO₂ so that a temperature of the sorbent bed desorbing CO₂ is greater than a temperature of the sorbent bed adsorbing CO₂; and
means (22;36) for reducing a partial pressure of CO₂ at the sorbent bed desorbing
CO₂.

2. The CO₂ removal system of claim 1, wherein the heat exchange system comprises a thermoelectric device (16); or
wherein the heat exchange system comprises a heat pump (28).

3. The CO₂ removal system of claim 1 or 2, wherein the heat exchange system is configured to heat the sorbent bed desorbing CO₂ to a temperature between 35 °C and 80°C and cool the sorbent bed adsorbing CO₂ to a temperature between 15 °C and 25°C; preferably
wherein the heat exchange system is configured to heat the sorbent bed desorbing CO₂ to a temperature between 55 °C and 80°C.

4. The CO₂ removal system of claim 1, 2 or 3, wherein the CO₂ removal system is configured such that, in use, a temperature difference between the sorbent bed desorbing CO₂ and the sorbent bed adsorbing CO₂ is between 10°C and 65 °C.

5. The CO₂ removal system of any preceding claim, further comprising a controller (24), wherein the controller is configured to determine which of the sorbent beds adsorbs CO₂ and which of the sorbent beds desorbs CO₂.

6. The CO₂ removal system of any preceding claim, wherein the means for reducing a partial pressure of CO₂ at the second sorbent bed comprises a vacuum (36) in fluid communication with the second sorbent bed.

7. The CO₂ removal system of any of claims 1 to 5, wherein the means for reducing a partial pressure of CO₂ at the second sorbent bed comprises a pump (22) in fluid communication with the second sorbent bed.

8. The CO₂ removal system of any preceding claim, further comprising:
an inlet passage connectable to the first sorbent bed and the second sorbent bed;
an inlet valve (12) connected to the inlet passage and switchable between a first
position and a second position;
an outlet passage connectable to the first sorbent bed and the second sorbent bed;
an outlet valve (18) connected to the outlet passage and switchable between a first
position and a second position;
a carbon dioxide passage connectable to the first sorbent bed and the second
sorbent bed; and
a carbon dioxide valve (20) connected to the carbon dioxide passage and
switchable between a first position and a second position.

9. A method for removing carbon dioxide (CO₂) from a gas stream, the method comprising:
supplying the gas stream to a first sorbent bed (14A) containing a solid amine
sorbent (26) and a second sorbent bed (14B) containing a solid amine sorbent (26) to cause CO₂ to be adsorbed and removed from the process air stream;
reducing a pressure of one of the first and second sorbent beds to cause CO₂ to be
desorbed and removed from the first and second sorbent beds so that one of the first and second sorbent beds is adsorbing CO₂ and the other sorbent bed is desorbing CO₂;
heating the sorbent bed that is desorbing CO₂ and cooling the sorbent bed that is
adsorbing CO₂ so that a temperature of the sorbent bed desorbing CO₂ is greater than a temperature of the sorbent bed adsorbing CO₂; and removing CO₂ from the sorbent bed desorbing CO₂ as a CO₂ gas stream.

10. The method of claim 9, wherein heating the sorbent bed desorbing CO₂ comprises transferring heat generated from CO₂ adsorption by the sorbent bed adsorbing CO₂ to the sorbent bed desorbing CO₂; preferably wherein heating the sorbent bed desorbing CO₂ comprises supplying a heat transfer fluid to the sorbent bed desorbing CO₂ using a heat pump (28); or
wherein heating the sorbent bed desorbing CO₂ and cooling the sorbent bed adsorbing CO₂ comprises applying a voltage to a thermoelectric device (16) thermally connected to the first and second beds.

11. The method of claim 9 or 10, wherein the sorbent bed desorbing CO₂ is heated to a temperature between 35°C and 80°C and the sorbent bed adsorbing CO₂ is cooled to a temperature between 15°C and 25°C; preferably wherein the sorbent bed desorbing CO₂ is heated to a temperature between 55°C and 80°C.

12. The method of claim 9, 10 or 11, wherein a temperature difference between the sorbent bed desorbing CO₂ and the sorbent bed desorbing CO₂ is between 10°C and 65°C.

13. The method of any of claims 9 to 12, wherein the first and second beds transition between adsorbing CO₂ and desorbing CO₂, and wherein the transition occurs after no more than 30 minutes.

14. The method of any of claims 9 to 13, wherein the gas stream contains between 0.5% CO₂ and 1% CO₂ by volume.

15. The method of any of claims 9 to 14, wherein the CO₂ gas stream contains at least 90% CO₂ by volume.
